Europäisches Patentamt

European Patent Office

Office européen des brevets

(11) Publication number: **0 290 030 B1**

# EUROPEAN PATENT SPECIFICATION

(45) Date of publication of patent specification: **29.07.92**　(51) Int. Cl.⁵: **C02F 1/24**, C02F 1/52, C02F 1/40, B01D 17/035

(21) Application number: **88107268.0**

(22) Date of filing: **06.05.88**

(54) **Treament of oil effluent.**

(30) Priority: **07.05.87 GB 8710750**

(43) Date of publication of application:
**09.11.88 Bulletin 88/45**

(45) Publication of the grant of the patent:
**29.07.92 Bulletin 92/31**

(84) Designated Contracting States:
**AT BE CH DE ES FR GR IT LI LU NL SE**

(56) References cited:
**US-A- 3 687 845**

**POWER, vol. 129, no. 6, June 1985, pages 98-99, New York, US; "Polymeric coagulant reduces sludge volume in wastewater treatment"**

(73) Proprietor: **British Steel plc
9 Albert Embankment
London SE1 7SN(GB)**

(72) Inventor: **Woodman, Gwilym Leslie
57 Carisbrooke Way
Cyncoed Cardiff(GB)**

(74) Representative: **Shipley, Henry Horton
British Steel plc Patents Section 9 Albert
Embankment
London SE1 7SN(GB)**

EP 0 290 030 B1

# Description

This invention relates to the treatment of oil effluent, in particular the splitting or separation of waste soluble oil arising from an industrial process such as to produce an acceptably oil-free water for ready discharge into water courses.

Hitherto, one method for disposing of a waste oil emulsion from industrial sites has involved acid "cracking" involving heating the emulsion and treating with sulphuric or hydrochloric acids. This method is costly to run, however, because of the requirement to heat the emulsion and the need to purchase the acid. Further, the oil and agueous sidestreams produced are extremely acidic which thus need to be neutralised, involving more cost.

Another method, e.g. as described in 'Power' vol.129 no.6, June 1985, utilises a more efficient solution by splitting a soluble oil effluent in dissolved air flotation cells after having been subjected to coarse separation. A coagulant is first applied to the cells followed by a flocculant, each of these components comprising a cationic polymer in the preferred route.

It is an object of this invention to provide an improved treatment method.

The present invention consists in a method of splitting a soluble oil effluent, in which the effluent is initially applied to a coarse separator and is then mixed with a polyelectrolyte and a coagulant, characterised in that the liquid effluent is mixed in successive stages, first with the polyelectrolyte comprising a cationic polymer and then with the coagulant comprising an anionic polymer, the resultant flocculated oil/water phase then being treated in a dissolved air flotation unit whereby separate and recover the oil and water fractions.

In accordance with this invention then, the flocculant is a cationic polymer and the coagulant is an anionic polymer; this provides a more efficient combination than hitherto for promoting coalescence and consequently, separation.

Although this invention is designed to operate at ambient temperatures, the tanks for the mixer stages may be heated such that the reaction takes place at, say, between 22°C and 27°C.

A coagulating tank may be provided immediately downstream of the mixer stages for the mixture to dwell for a period; slow stirring motion may be imparted to the contents here. A static clarifier tank may follow the coagulating tank, again to provide a dwell period for the separating mixture, the floating oil being recovered so as to provide a cleaner/clearer mixture for the dissolved air flotation unit.

Preferably, the coarse separator is a tilted plate (corrugated) separator.

Oil concentrations of 0.1% to 25% in the effluent may readily by treated in accordance with this invention from which substantially oil free water (oil level of the order of 0.01%) may be obtained. With further processing, "polishing", this may be reduced again eg. to 0.003%.

The chemical oxygen demand on the water course with this much cleansed effluent is reduced by a significant factor (8) compared with practice hitherto.

The polyelectrolyte is a low molecular weight cationic polymer the function of which is to coalesce the very finely divided oil droplets in the effluent into larger agglomerates in which form they separate easily from the main aqueous phase.

The coagulant (flocculant) is a higher molecular weight liquid anionic polymer which enhances the action of the cationic polyelectrolyte by allowing the aforementioned agglomerates to grow, thus facilitating their even faster removal from the aqueous phase.

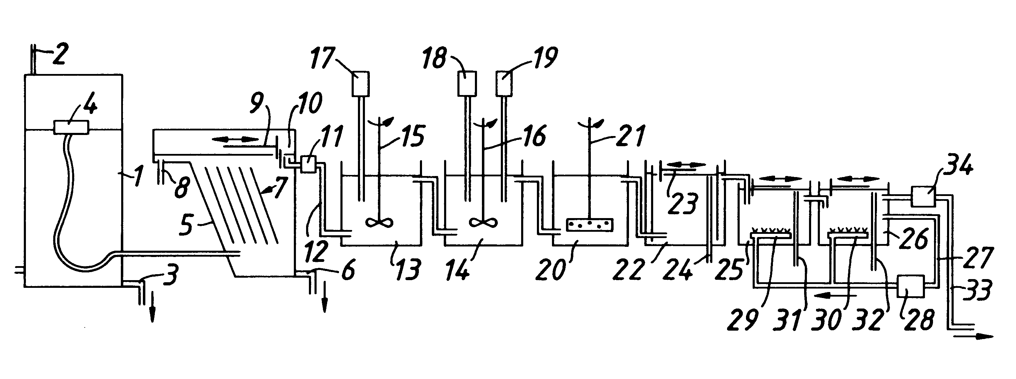

In order that the invention may be fully understood, one embodiment thereof will now be described, by way of example, with reference to the accompanying drawing which schematically illustrates apparatus for performing this method.

In particular, oil effluent from say, an electrical strip steel treatment mill, eg. waste oil emulsion together with insoluble tramp oil such as lubricating oil, is collected in an insulated holding tank which is vented at 2 and has an outlet port 3 for sedimentary sludge, grit etc. A pump 4 floats on the surface of the effluent, so as to be well clear of the sludge and to maintain an appreciable oil concentration, and pumps the effluent to a tilted plate separator 5. As with tank 1, this separator has a sludge port 6 but its principal component is a series of inclined closely spaced corrugated plates 7. The insoluble (black) oil content is 'intercepted' by the underside of these plates which particles (say >85 microns) flow to the peaks of the corrugations and are released at the top as larger droplets which float on the surface and are removed via a drain 8 on being scraped towards same by a reciprocable scraper 9. The "clean" oil emulsion collects in a shielded area 10 and this emulsion is gravity fed through an oil-monitoring unit 11 via pipework 12 to the first of two chemical dosing tanks 13, 14 having high speed stirrers 15, 16 respectively.

A polyelectrolyte blended with water for the concentration required is introduced into tank 13 by a dosing pump 17 and the mixed content flows to the adjoining tank 14 at which a further dose of the polyelectrolyte/water solution is introduced for trimming via pump 18; additionally, a coagulant, likewise blended with water is introduced here by pump 19 - this may be of the peristaltic type.

The liquid mixture flows under gravity from the tank 14 to dwell in a tank 20 which has a very slow speed stirrer 21 to promote coagulation and flocculation of the separated oil. From here the liquid flows to a static clarifier tank 22 to allow a further period for flocculation, a reciprocable scraper 23 being sited here to drain off the collected oil fraction via 24.

The clearer liquid which collects around the periphery of this tank is taken off into the first of two dissolved air flotation units 25, 26 which are serially coupled. These speed up the separation of the oil floccs from the mixture entering and operate by recycling a proportion, about 10%, of the 'clean' water tapped off at 27 and dissolving air in this under pressure in a compressor unit 28, this aerated fluid then being injected through nozzles 29, 30. The microbubbles issuing from these nozzles attach themselves to the oil 'mousse' formed on the surface - typically 10% oil and 45% each of water and air-is periodically scraped off to drains 31, 32. The clean water output from the second of the d.a.f's (26) is passed to a final discharge drain 33 via a monitor 34.

In particular, this monitor and that at 11 are utilised to govern the dose rate of the chemicals into the tanks 13, 14; without this matching under-dosing will not fully destabilise the emulsion whilst over-dosing will re-stabilise it.

By using as the polyelectrolyte the cationic polymer EM 470 FP (based on a copolymer of Acrylamide and quarternised cationic monomer; molecular wt about $2 \times 10^6$) prepared as an emulsion - 48% active content - and as the coagulant a liquid anionic polymer EA 300 (based on a copolymer of Acrylamide and Sodium Acrylate; molecular wt about $13 \times 10^6$; 0.1% active) the water discharged at 33 may readily have an oil level as low as about 0.01%. Flow rates of the order of 8 cubic metres per hour have been successfully treated.

Although the invention has been described with reference to the particular embodiment illustrated it is to be understood that various modifications may readily be made without departing from the scope of the invention. For example, further delay tanks or coils may be introduced to aid separation and clarification and, as mentioned, heaters may be introduced into the dosing tanks to aid the reaction. Further, other polyelectrolytes and coagulants than those specifically noted above may equally well be used.

## Claims

1. A method of splitting a soluble oil effluent, in which the effluent is initially applied to a coarse separator, and is then mixed with a polyelectrolyte and a coagulant, characterised in that the liquid effluent is mixed in successive stages, first with the polyelectrolyte, comprising a cationic polymer 13, and then with the coagulant, comprising an anionic polymer, the resultant flocculated oil/water phase then being treated in a dissolved air flotation unit 25, 26 whereby to separate and recover the oil and water fractions.

2. A method according to claim 1, characterised in that the mixing stages are effected in tanks equipped with heaters.

3. A method according to claim 1 or claim 2, characterised in that storage tanks 20, 22 are provided for the coagulated mixture, whereby to permit dwell periods for said mixture and the separating (floating) oil to be removed prior to treatment of the residue in the dissolved air flotation unit.

4. A method according to any one of claims 1 to 3, characterised in that aerated water is injected into the flotation unit through a plurality of nozzles 29, 30 whereby to produce a rising cloud of microbubbles effective to float the oil floccs to the surface to form thereon an oil mousse for removal.

5. A method according to any one of claims 1 to 4, characterised in that a cleanliness monitor 34 is provided at the water outlet from the dissolved air flotation unit whereby to govern the dosage rate of the polyelectrolyte and coagulant.

6. A method according to any one of claims 1 to 5, characterised in that the cationic polymer is based on a copolymer of acrylamide and a quarternised cationic monomer.

7. A method according to any one of claims 1 to 6, characterised in that the coagulant is based on a copolymer of acrylamide and sodium acrylate, in liquid or powdered form.

## Revendications

1. Procédé de fractionnement d'un effluent huileux soluble, dans lequel l'effluent est initialement envoyé dans un séparateur grossier, puis mélangé avec un polyélectrolyte et un coagulant, caractérisé en ce que l'effluent liquide est mélangé par étapes successives, d'abord avec le polyélectrolyte, comprenant un polymère cationique 13, puis avec le coagulant, comprenant un polymère anionique, la phase huile/eau floculée résultant étant ensuite traitée dans une unité de flottation à air dissous 25, 26, ce qui permet de séparer et de récupérer les fractions huileuse et aqueuse.

2. Procédé selon la revendication 1, caractérisé en ce que les étapes de mélange sont effectuées dans des cuves équipées de dispositifs de chauffage.

3. Procédé selon la revendication 1 ou la revendication 2, caractérisé en ce que des cuves de stockage 20, 22 sont prévues pour le mélange coagulé, ce qui ménage des temps d'arrêt pour ledit mélange et permet de retirer l'huile séparée (flottant) avant le traitement du résidu dans l'unité de flottation à air dissous.

4. Procédé selon l'une quelconque des revendications 1 à 3, caractérisé en ce que l'eau aérée est injectée dans l'unité de flottation par une pluralité de tuyères 29, 30, pour produire un nuage ascendant de microbulles efficace pour faire flotter le floculat d'huile vers la surface pour y former une mousse huileuse que l'on peut retirer.

5. Procédé selon l'une quelconque des revendications 1 à 4, caractérisé en ce qu un détecteur de propreté 34 est prévu à la sortie de l'eau de l'unité de flottation à air dissous, pour commander le débit d'addition du polyélectrolyte et du coagulant.

6. Procédé selon l'une quelconque des revendications 1 à 5, caractérisé en ce que le polymère cationique est à base d'un copolymère d'acrylamide et d'un monomère cationique quaternisé.

7. Procédé selon l'une quelconque des revendications 1 à 6, caractérisé en ce que le coagulant est à base d'un copolymère d'acrylamide et d'acrylate de sodium, sous forme liquide ou pulvérulente.

**Patentansprüche**

1. Verfahren zur Spaltung eines löslichen ölhaltigen Abwassers, bei dem das Abwasser zunächst in einen Grobtrennungsapparat eingebracht und sodann mit einem Polyelektrolyt und einem Koagulierungsmittel gemischt wird, dadurch gekennzeichnet, daß das flüssige Abwasser in aufeinanderfolgenden Stufen zuerst mit dem aus einem kationischen Polymer 13 bestehenden Polyelektrolyt und anschließend mit dem aus einem anionischen Polymer bestehenden Koagulierungsmittel gemischt wird, wonach die gebildete ausgeflockte Öl-Wasser-Phase in einem gelöste Luft enthaltenden Flotationsapparat 25, 26 behandelt wird, wodurch die Öl- und Wasserfraktionen getrennt und zurückgewonnen werden.

2. Verfahren nach Anspruch 1, dadurch gekennzeichnet, daß die Mischungsstufen in mit Heizungen ausgestatteten Behältern erfolgen.

3. Verfahren nach Anspruch 1 oder 2, dadurch gekennzeichnet, daß Lagerbehälter 20, 22 für die koagulierte Mischung vorgesehen sind, wodurch Verweilzeiten für jene Mischung und das auszuschleusende Trenn(Schwebe)-Öl vor der Behandlung des Rückstands in dem gelöste Luft enthaltenden Flotationsapparat ermöglicht werden.

4. Verfahren nach einem der Ansprüche 1 bis 3, dadurch gekennzeichnet, daß luftgesättigtes Wasser in den Flotationsapparat durch mehrere Düsen 29, 30 eingespritzt wird, wodurch eine aufsteigende Wolke von Mikroblasen entsteht, deren Wirkung darin besteht, daß die Ölflocken zur Oberfläche schweben, wo sie einen Ölschaum bilden, der sich entfernen läßt.

5. Verfahren nach einem der Ansprüche 1 bis 4, dadurch gekennzeichnet, daß eine Reinheitskontrollvorrichtung 34 am Wasserablauf aus dem gelöste Luft enthaltenden Flotationsapparat vorgesehen ist, wodurch die Zufuhrrate des Polyelektrolyten und Koagulierungsmittels reguliert wird.

6. Verfahren nach einem der Ansprüche 1 bis 5, dadurch gekennzeichnet, daß das kationische Polymere auf einem Copolymeren aus Acrylamid und einem quarternisierten kationischen Monomeren beruht.

7. Verfahren nach einem der Ansprüche 1 bis 6, dadurch gekennzeichnet, daß das Koagulierungsmittel auf einem Copolymeren aus Acrylamid und Natriumacrylat in flüssiger oder Pulverform beruht.